# EUROPEAN PATENT APPLICATION

(11) **EP 3 034 232 A1**
(43) Date of publication of application: **22.06.2016**
(21) Application number: 14836291.6
(22) Date of filing: 11.08.2014
(51) Int. Cl.: B23K 37/047, G21C 13/00

(54) **SUPPORT DEVICE FOR MANUFACTURING CYLINDRICAL CONTAINER**

(30) Priority: 13.08.2013 JP 2013167981
(71) Applicant: IHI Corporation, Tokyo 135-8710 (JP)
(72) Inventor: MORI, Toshimichi, Tokyo 135-8710 (JP); NAKAGAWA, Akira, Tokyo 135-8710 (JP)
(74) Representative: Maury, Richard Philip
(86) International application number: PCT/JP2014/071210
(87) International publication number: WO 2015/022943

(57) **Abstract**

Two turning roller devices (4) are provided side-by-side in an X-axis direction along an axial position of a cylindrical container (2) to be manufactured, which is disposed in a horizontally-long orientation. Skids (5) including recessed parts (11) configured to receive the cylindrical container (2) are provided outside the two turning roller devices (4) while being supported by jack-up stands (7) including jacks (6). Each turning roller device (4) includes a function capable of changing an interval between two rollers (9). Welding work and non-destructive inspection work on the cylindrical container (2) in the circumferential direction are performed by rotating the cylindrical container in the circumferential direction on the rollers (9) with the interval decreased in each turning roller device (4). A pressure proof test is performed on the cylindrical container (2) passed from the turning roller devices (4) onto the skids (5) on the jack-up stands (7) with the interval between the rollers (9) increased in each turning roller device (4). Thereby, operation time and costs are reduced, and work quality is prevented from deteriorating due to the worsening of the working posture.

## Description

### [Technical Field]

The present invention relates to a support device for manufacturing a cylindrical container suitable to manufacture a large cylindrical container, and particularly a cylindrical pressure container which requires a pressure proof test to be performed with water poured in the container in the manufacturing process.

### [Background Art]

For example, in a widely-used way of manufacturing of a large cylindrical container such as a steam generator, the container is mounted on a stand with an axial direction of the container disposed horizontally (the container overturned sideways), and manufacturing work such as the joining of members is performed on the container (see PTL 1).

### [Citation List]

### [Patent Literature]

[PTL 1] Japanese Patent Application Publication No. 2012-163292

### [Summary of Invention]

### [Technical Problem]

Meanwhile, in a case where, for example, the cylindrical container is a pressure container, work of attaching the end plates to the two end portions of the body section of the cylindrical container in the axial direction requires full penetration welding to be performed along the whole periphery of the container in the circumferential direction from both outside and inside of the container. Furthermore, for the welded part after the welding work, non-destructive inspection work, such as ultrasonic testing or radiographic testing, needs to be performed on the entire length of the welded part, i.e., the whole periphery of the container in the circumferential direction.

To this end, before the welding work and the non-destructive inspection work are performed on the container mounted on the stand with the axial direction disposed horizontally as in the conventional manner, areas into which the periphery of the container are divided by a certain angle in the circumferential direction are set as multiple work areas, and scaffolds are set up, respectively, inside and outside the container for one of the work areas. Then, the welding work and the non-destructive inspection work are performed.

After the completion of the work in the one work area, the scaffolds inside and outside the container are removed, and the container is turned using a crane or the like by the predetermined angle by which the work areas are set.

Subsequently, the scaffolds are set up again for a new work area adjacent to the work area where the work has been completed, and the welding work and non-destructive inspection work are performed.

This procedure is repeatedly performed one after another for all the work areas set in the circumferential direction. Thereby, the welding work and the non-destructive inspection work are completed along the whole periphery in the circumferential direction.

As a result, the conventional practice involves a long operation time and high costs since the scaffolds need to be set up and removed for each of the multiple work areas. In addition, for each work area, a working posture needs to be changed in order to deal with the welded part extending in the circumferential direction. Furthermore, if the working posture worsens when changed, this is highly likely to cause work quality deterioration, particularly defective welding.

In addition, when the cylindrical container is large in size, its heavy weight may make it difficult for an existing crane in the container-manufacturing factory to hoist the container and to change the orientation of the container in the circumferential direction.

Here, if the cylindrical container is a pressure container, a pressure proof test needs to be performed on the container in which water is contained with pressure applied. In such a pressure proof test, the weight of the container is further increased by the water contained into the container, and therefore the container needs to be securely supported by the stands.

Under these circumstances, the present invention aims to provide a support device for manufacturing a cylindrical container capable of: reducing the number of times a scaffold is set up and removed for the welding work and the non-destructive inspection work on a large cylindrical container, and thereby reducing the operation time and costs; making the working posture for the welding work and the non-destructive inspection work stable; and securely supporting the container using stands when a pressure proof test is performed on the container.

### [Solution to Problem]

An aspect of the present invention is a support device for manufacturing a cylindrical container. Its gist is as follows. The support device for manufacturing a cylindrical container includes: multiple turning roller devices arranged at a certain interval in one axial direction horizontal in a vertical plane along an axial position of a cylindrical container to be manufactured, the cylindrical container disposed in a horizontally-long orientation; multiple skids arranged at a certain interval in the one axial direction, and including recessed parts configured to receive and pass the cylindrical container from and to the turning roller devices; and jack-up stands arranged while supporting the skids, and including jacks.

Each of the turning roller devices may include a function of decreasing and increasing an interval between two rollers. Each of the turning roller devices may include a function of: disposing the two rollers with the interval decreased so that the rollers support the cylindrical container while being arranged upwardly away from the skids on the jack-up stands in which the jacks are contracted; and disposing the two rollers with the interval increased so that the two rollers retreat to positions where the two rollers are out of contact with the cylindrical container which is supported by the skids on the jack-up stands in which the jacks are contracted.

Each of the jack-up stands may include: a base member including a base plate, and a square tube-shaped load transfer wall extending in a vertical direction on the base plate; and a lifting member including a rectangular parallelepiped-shaped load transfer block containable inside an upper portion of the load transfer wall, and a top board arranged on an upper portion of the load transfer block and being larger in a planar shape than the load transfer wall. The jack-up stand may be formed such that the corresponding jack is housed in a position which is inside the load transfer wall and under the lifting member.

### [Advantageous Effects of Invention]

The present invention can reduce the number of times a scaffold is set up and removed, or can make no scaffold necessary, for welding work and non-destructive inspection work in the process of manufacturing the cylindrical container. For this reason, the present invention can decrease operation time and costs. In addition, the present invention can make working posture for the welding work and the non-destructive inspection work stable, and can prevent work quality from deteriorating due to the worsening of the working posture.

### [Brief Description of Drawings]

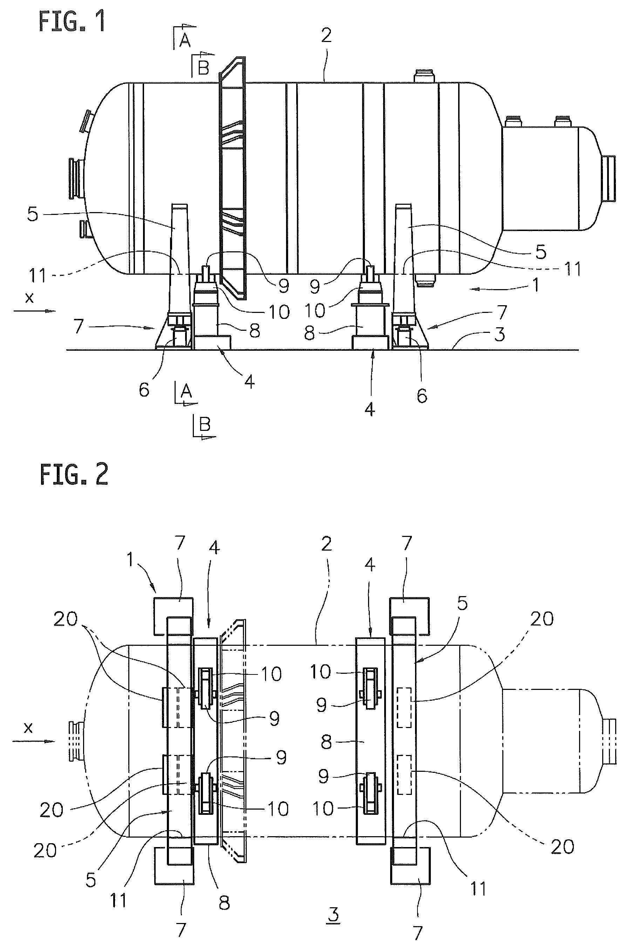

[Fig. 1] Fig. 1 is a schematic side view showing a support device for manufacturing a cylindrical container of the embodiment of the present invention.
[Fig. 2] Fig. 2 is a schematic plan view of the support device for manufacturing a cylindrical container shown in Fig. 1.

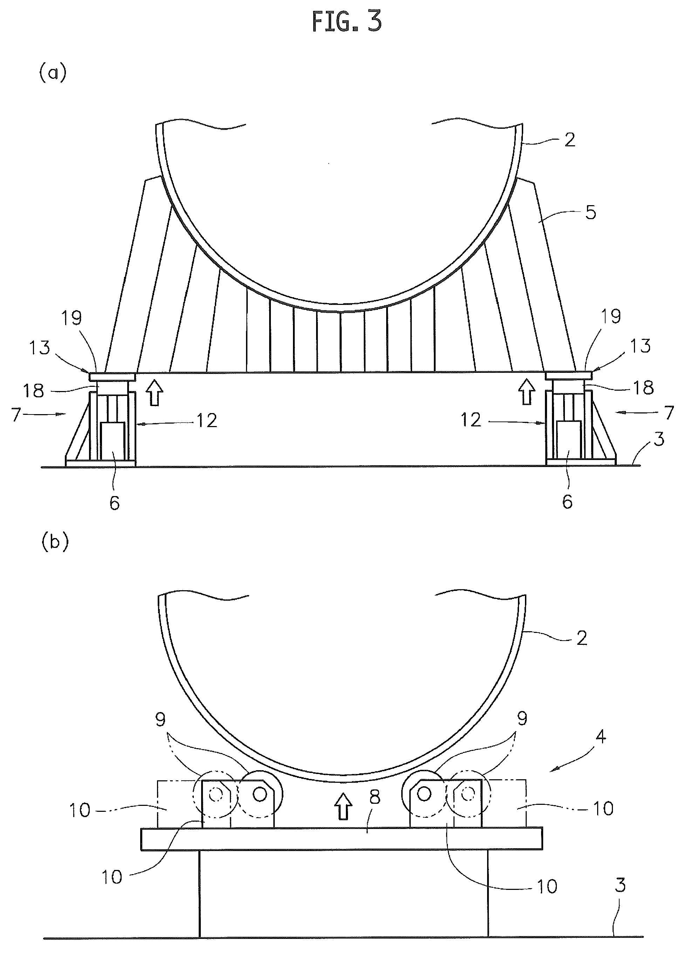

[Fig. 3] Figs. 3(a) and 3(b) are views showing the support device for manufacturing a cylindrical container shown in Fig. 1, in which jacks in jack-up stands are extended. Fig. 3 (a) is a magnified view corresponding to an arrow view taken along the A-A line of Fig. 1. Fig. 3(b) is a magnified view corresponding to an arrow view taken along the B-B line of Fig. 1.

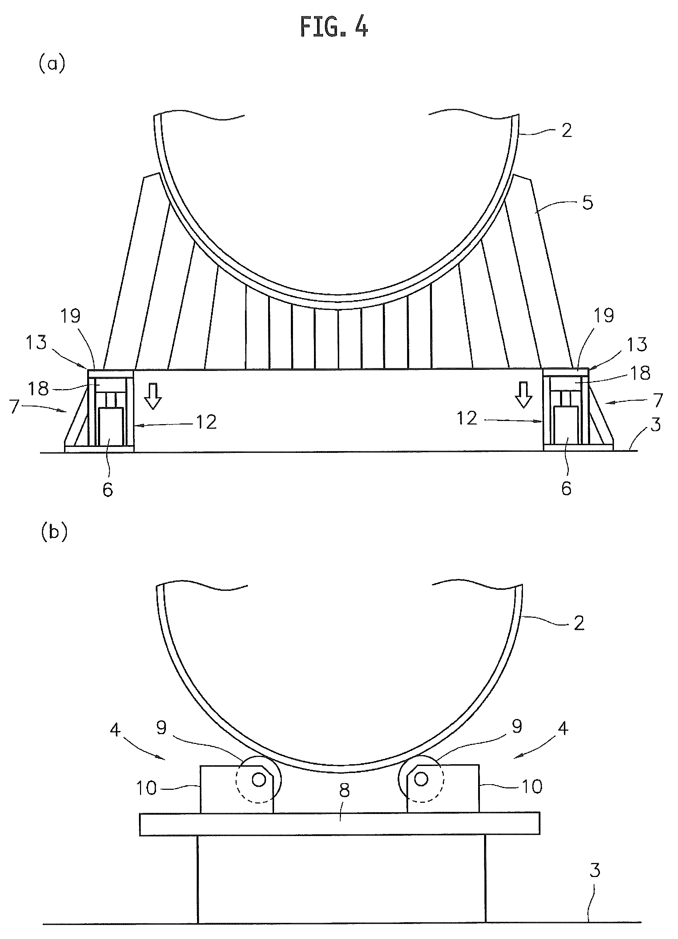

[Fig. 4] Figs. 4(a) and 4(b) are views showing the support device for manufacturing a cylindrical container shown in Fig. 1, in which: an interval between rollers in each turning roller device is decreased; and the jacks in the jack-up stands are contracted. Fig. 4 (a) is a magnified view corresponding to the arrow view taken along the A-A line of Fig. 1. Fig. 4 (b) is a magnified view corresponding to the arrow view taken along the B-B line of Fig. 1.

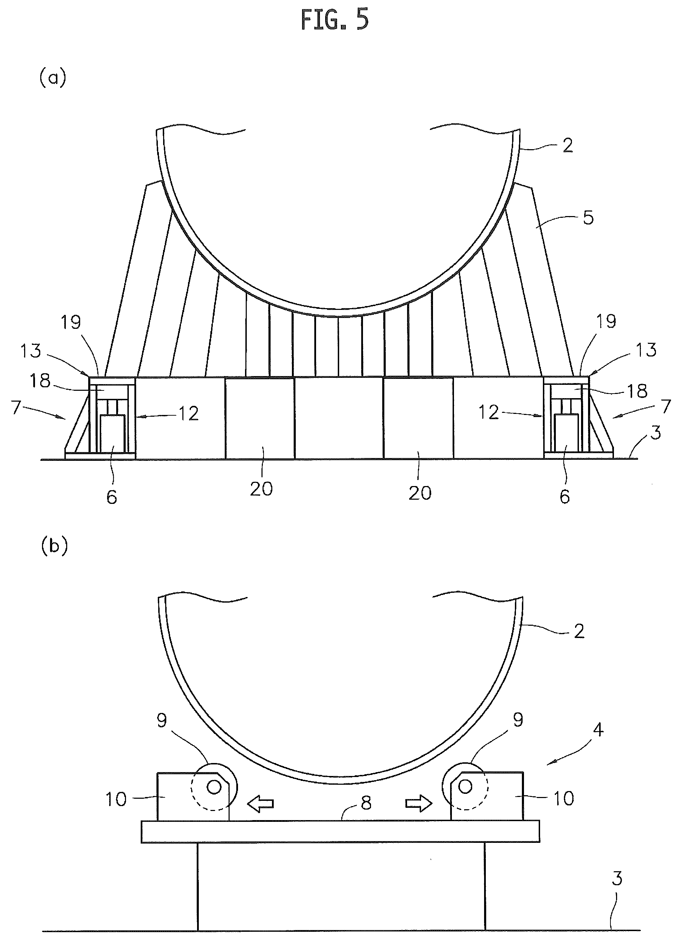

[Fig. 5] Figs. 5(a) and 5(b) are views showing the support device for manufacturing a cylindrical container shown in Fig. 1, in which: the interval between rollers in each turning roller device is increased; and the jacks in the jack-up stands are contracted. Fig. 5 (a) is a magnified view corresponding to the arrow view taken along the A-A line of Fig. 1. Fig. 5(b) is a magnified view corresponding to the arrow view taken along the B-B line of Fig. 1.

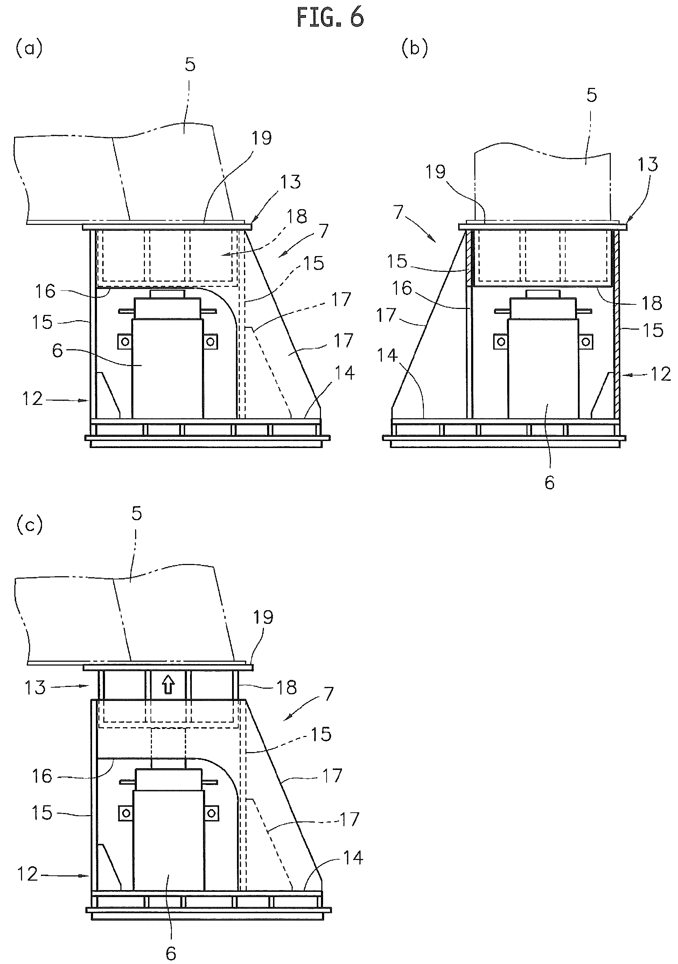

[Fig. 6] Figs. 6(a) to 6(c) are magnified views showing one jack-up stand in the support device for manufacturing a cylindrical container shown in Fig. 1. Fig. 6(a) is a schematic front view of the jack-up stand. Fig. 6(b) is a schematic sectional side view of the jack-up stand. Fig. 6 (c) is a schematic front view of showing the jack-up stand in which the jack is extended.

### [Description of Embodiments]

Referring to the drawings, descriptions will be hereinbelow provided for an embodiment of the present invention.

Figs. 1 to 6(c) show a support device 1 for manufacturing a cylindrical container of the embodiment.

In the following descriptions, an X-axis direction means the direction of extension of an X-axis which is a horizontal axis in a vertical plane along an axial position (axis) of a cylindrical container 2 to be manufactured, the cylindrical container 2 disposed in a horizontally-long orientation (overturned sideways) in a container manufacturing factory.

In the support device 1 for manufacturing a cylindrical container of the embodiment, turning roller devices 4 are set respectively in two places on a floor surface (basal surface) 3 of the factory which are away from each other in the X-axis direction with a certain interval interposed in between.

Furthermore, skids 5 configured to support the cylindrical container 2 in such a way that the cylindrical container 2 is not rotatable are arranged respectively in other two places on the floor surface 3 of the factory which are away from each other in the X-axis direction with another certain interval interposed in between, for example two places respectively near the outsides of the two turning roller devices 4. The two end portions of each skid 5 in a widthwise direction orthogonal to the X-axis direction are arranged, respectively, supported by jack-up stands 7 which contain their respective jacks 6.

Each turning roller device 4 includes a support 8 which is set on the floor surface 3 of the factory using bolt-like detachable fixing members (not illustrated). The turning roller device 4 has a shape which extends by a certain dimension in the widthwise direction orthogonal to the X axis. On the support 8, a pair of rollers 9 having parallel rotary shafts extending in the X-axis direction are disposed respectively in two positions axially symmetric with respect to the X axis (positions equidistant from the X axis in the widthwise direction), and are rotatably supported by the two respective independent brackets 10.

In addition, each turning roller device 4 has a roller interval changing unit (not illustrated) on the support 8. The roller interval changing unit increases and decreases an interval between the rollers 9 by changing the positions of the brackets 10, to which the respective rollers 9 are attached, in a direction in which the brackets 10 get closer to and farther from the X axis in the widthwise direction orthogonal to the X-axis direction. Incidentally, descriptions will be later provided for a relationship between the elevation of the skid 5 by the jacks 6 of the jack-up stands 7 and the interval between the rollers 9 to be changed with the roller interval changing unit.

At least one of the turning roller devices 4 includes a motor-like rotational driving unit (not illustrated) configured to rotationally drive either or both of the pair of rollers 9. Thereby, in each of the two turning roller devices 4, the two rollers 9 are capable of: receiving and supporting a corresponding part of the outer peripheral surface in the axial direction of the cylindrical container 2 disposed horizontally-long. Furthermore, when the rotational driving unit (not illustrated) rotationally drives one or multiple corresponding rollers 9, the cylindrical container 2 can be rotated in its circumferential direction while supported by the rollers 9.

Each skid 5 extends in the widthwise direction orthogonal to the X-axis direction, and has a semicircular recessed part 11 on an upper surface side of the skid 5. The recessed part 11 extends along a corresponding part of the outer peripheral surface of the cylindrical container 2 in the axial direction. Thereby, the recessed part 11 of each skid 5 receives the corresponding part of the outer peripheral surface of the cylindrical container 2 in the axial direction, and thus supports the cylindrical container 2. Moreover, since the skids 5 support the cylindrical container 2, the cylindrical container 2 is prevented from changing its position in its rotational direction.

As shown in Figs. 6(a) to 6(c), the jack-up stand 7 supports the skid 5. The jack-up stand 7 includes: a base member 12 having a structure which enables the base member 12 to contain the jack 6; and an lifting member 13 placed on the base member 12, and configured to be lifted and lowered by the jack 6 contained in the base member 12.

The base member 12 includes: a base plate 14 in the shape a square flat surface; and a square tube-shaped load transfer wall 15 provided on the base plate 14, and extending in the vertical direction. One side wall surface of the load transfer wall 15 is provided with an opening 16 through which to put the jack 6 into and out of the base member 12. In addition, the load transfer wall 15 includes reinforcement ribs 17 which are provided between outer surfaces at the positions between which the opening 16 is interposed and the upper surface of the base plate 14.

The lifting member 13 includes: a load transfer block 18; and a top board 19 attached to the upper end portion of the load transfer block 18. The load transfer block 18 has a planar shape which enables the load transfer block 18 to be disposed inside the load transfer wall 15 of the base member 12, and has a vertically-flattened rectangular parallelopiped shape. The top board 19 is larger in a planar shape than the load transfer wall 15 of the base member 12. For this reason, the skid 5 is placed on the top board 19 of the jack-up stand 7.

The jack-up stand 7 receives the jack 6 through the opening 16, and contains the jack 6 inside the load transfer wall 15. When the jack-up stand 7 extends the jack 6, the jack 6 lifts the skid 5 placed on the top board 19, together with the lifting member 13. In this process, load applied from the skid 5 is transferred from the lifting member 13, via the jack 6 and the bases plate 14 of the base member 12, to a part of the floor surface 3 on which the jack-up stand 7 is set.

Meanwhile, when the jack-up stand 7 contracts the jack 6, the load transfer block 18 of the lifting members 13 is contained in the upper portion of the load transfer wall 15 of the base member 12, and the outer peripheral edge portions of the top board 19 are placed on the load transfer wall 15. For this reason, load applied from the skid is directly transferred from the outer peripheral edge portions of the top board 19 of the lifting members 13 to the load transfer wall 15 of the base member 12, and is thereafter transferred from the load transfer wall 15, via the bases plate 14, to the part of the floor surface 3 on which the jack-up stand 7 is set. Accordingly, while in this condition, the jack-up stand 7 is capable of supporting the load applied from the skid 5 without depending on the capabilities of the jacks 6.

Here, descriptions will be provided for the relationship between the elevation of the skid 5 by the jack-up stands 7 and the interval between the rollers 9 to be changed with the roller interval changing units in the turning roller device 4.

As shown in Fig. 3(a), when the jack-up stands 7 extend the jacks 6 to an extent that the skid 5 is lifted highest, the skid 5 receives and thus supports the cylindrical container 2. In this process, as shown in Fig. 3(b), the cylindrical container 2 received by the skid 5 is situated at a position which is upwardly away from the rollers 9, regardless of the interval between the rollers 9 in the turning roller device 4. For this reason, while in this condition, the turning roller device 4 is capable of increasing or decreasing the interval between the rollers 9 without interfering with the cylindrical container 2.

Next, when as shown in Figs. 4 (a) and 4(b), the turning roller device 4 decreases the interval between the rollers 9 and the jack-up stands 7 contract the jacks 6 to an extent that the skid 5 descends lowest, the cylindrical container 2 is placed on the rollers 9 in the turning roller device 4, as shown in Fig. 4(b). In other words, the turning roller device 4 receives and thus supports the cylindrical container 2. In this process, as shown in Fig. 4(a), the cylindrical container 2 becomes upwardly away from the skid 5. For this reason, while in the condition, the cylindrical container 2 can rotate in the circumferential in accordance with the rotational drive of the rollers 9 in the turning roller device 4.

In contrast to this, when as shown in Figs. 5(a) and 5(b), the turning roller device 4 increases the interval between the rollers 9, the rollers 9 in the turning roller device 4 retreat outward, as shown in Fig. 5(b), to positions where the rollers 9 are out of contact with the cylindrical container 2 supported by the skid 5, even when the skid 5 descends lowest due to the contraction of the jacks 6 by the jack-up stands 7. For this reason, while in this condition, as shown in Fig. 5(a), the cylindrical container 2 can be supported by the skid 5 and the jack-up stands 7 without depending on the capabilities of the jacks 6.

It should be noted that for the purpose of putting the cylindrical container 2 in the conditions shown in Figs. 5(a) and 5(b), the skid 5 supported by the jack-up stands 7 be also supported by an auxiliary support 20 which is beforehand disposed on the floor surface 3 right under the skid 5.

What is to be done before the cylindrical container 2 is manufactured using the support device 1 for manufacturing a cylindrical container of the embodiment is to decrease the interval between the rollers 9 in each turning roller device 4, and to contract the jacks in the jack-up stands 7 supporting each skid 5, as shown in Figs. 4(a) and 4(b).

Thereafter, a body section to form a part of the cylindrical container 2 is placed on the rollers 9 of the turning roller devices 4 and disposed above the skids 5 using a crane (not illustrated) installed in the factory, or other arbitrary conveyance unit.

Attachment of the end plates to the two respective ends of the body section of the cylindrical container 2 is achieved by performing full penetration welding along the whole periphery of the container in the circumferential direction from both inside and outside with the body section of the cylindrical container 2 rotated by the turning roller devices 4 depending on the necessity. After the welding, non-destructive inspection work is performed on the welded area along the whole periphery.

Since the cylindrical container 2 can be rotated in the circumferential direction for the welding work and the non-destructive inspection work depending on the necessity, the welding work and the non-destructive inspection work can be continuously performed in the circumferential direction. In addition, since the cylindrical container 2 as the object of the welding work and the non-destructive inspection work is rotated, the position and angle for the welding work and the non-destructive inspection work can be kept constant. This makes it possible to make the working posture for the welding work and the non-destructive inspection work stable, and to prevent work quality from deteriorating due to the worsening of the working posture.

In addition, the welding work or the non-destructive inspection work for the inside of the container requires particularly no scaffold any longer. No scaffold is needed when in the cylindrical container 2 to be rotated in the circumferential direction, a part near its lower end is chosen as an area on which to perform the work. Furthermore, the welding work and the non-destructive inspection work for the outside of the container can be performed with, for example, only one scaffold which is set up close to a part of the cylindrical container 2 in the circumferential direction. Moreover, use of an aerial work platform vehicle can make no scaffold necessary for the welding work or the non-destructive inspection work.

For these reasons, the support device 1 for manufacturing a cylindrical container of the embodiment can reduce the number of times the scaffold is set up and removed, or can make no scaffold necessary, while the cylindrical container is being manufactured. Accordingly, the support device 1 for manufacturing a cylindrical container of the embodiment can decrease operation time and costs.

The first thing to be done before a pressure proof test is performed on the cylindrical container 2 having just been manufactured is to, as shown in Figs. 3(a) and 3(b), extend the jacks 6 in the jack-up stands 7, and to cause the skids 5 lifted by the jacks 6 to receive the cylindrical container 2 on their tops from the turning roller devices 4.

Thereafter, as shown in Figs. 5(a) and 5(b), each turning roller device 4 increases the interval between the rollers 9, and contacts the jacks 6. Thereby, the cylindrical container 2 descends together with the skids 5, and is placed on the jack-up stands 7 and the auxiliary supports 20.

In this manner, the cylindrical container 2 and the skids 5 are supported by the jack-up stands 7 and the auxiliary supports 20. While in this condition, the pressure proof test is performed by: filling the cylindrical container 2 with water; and applying pressure to the cylindrical container 2.

During the pressure proof test, the weight of the cylindrical container 2 increases by the weight of water which is filled into the cylindrical container 2. Meanwhile, the cylindrical container 2 is supported by the jack-up stands 7 and the auxiliary supports 20 without depending on the capabilities of the jacks 6 at all. For this reason, the cylindrical container 2 can be securely supported despite of the increase in the weight of the cylindrical container 2.

After the pressure proof test, what is to be done to carry out the cylindrical container 2 from which water is drained is to temporarily lift the cylindrical container 2 together with the skids 5, as shown in Fig. 3(a) and 3(b), by use of the jacks 6 in the jack-up stands 7, and to, while in this condition, dismantle and remove the turning roller devices 4 depending on the necessity. The auxiliary supports 20 are also removed.

Thereafter, a conveyance vehicle (not illustrated) is moved to under the skid 5 with the two end portions of each skid 5 supported by the jacks 6 in the jack-up stands 7, and the jacks mounted on the conveyance vehicle are caused to receive the cylindrical container 2 on their tops from the skids 5. Thereby, the cylindrical container 2 together with the skids 5 may be loaded onto the conveyance vehicle.

As described above, the support device 1 for manufacturing a cylindrical container of the embodiment makes no crane necessary for the welding work or the non-destructive inspection work in the process of manufacturing the cylindrical container 2, for the pressure proof test on the manufactured cylindrical container 2, or for the carrying out of the cylindrical container 2. For this reason, the support device 1 for manufacturing a cylindrical container of the embodiment is suitable to manufacture the cylindrical container 2 whose weight is too heavy for the capability of any existing crane of a factory to deal with.

It should be noted that the present invention is not limited to the foregoing embodiment. The order of arrangement of the turning roller devices 4, the jack-up stands 7 and the skids 5 in the X-axis direction may be changed as necessary. For example, the jack-up stands 7 and the skids 5 may be disposed between the turning roller devices 4. Otherwise, the turning roller devices 4, the jack-up stands 7 and the skids 5 may be alternately disposed.

Three or more turning roller devices 4 may be provided in the X-axis direction.

Similarly, three or more sets of the jack-up stands 7 and the skids 5 may be provided in the X-axis direction.

The support device for manufacturing a cylindrical container of the present invention is applicable to the manufacturing of any cylindrical containers other than steam generators.

Furthermore, it is a matter of course that the present invention may be variously modified within a scope not departing from the gist of the present invention.

## Claims

1. A support device for manufacturing a cylindrical container comprising:
a plurality of turning roller devices arranged at a certain interval in one axial direction horizontal in a vertical plane along an axial position of a cylindrical container to be manufactured, the cylindrical container disposed in a horizontally-long orientation;
a plurality of skids arranged at a certain interval in the one axial direction, and including recessed parts configured to receive and pass the cylindrical container from and to the turning roller devices; and
jack-up stands arranged while supporting the skids, and including jacks.

2. The support device for manufacturing a cylindrical container according to claim 1, wherein
each of the turning roller devices includes
a function of decreasing and increasing an interval between two rollers, and
a function of: disposing the two rollers with the interval decreased so that the rollers support the cylindrical container while being arranged upwardly away from the skids on the jack-up stands in which the jacks are contracted; and disposing the two rollers with the interval increased so that the two rollers retreat to positions where the two rollers are out of contact with the cylindrical container which is supported by the skids on the jack-up stands in which the jacks are contracted.

3. The support device for manufacturing a cylindrical container according to claim 1 or 2, wherein
each of the jack-up stands includes
a base member including a base plate, and a square tube-shaped load transfer wall extending in a vertical direction on the base plate, and
a lifting member including a rectangular parallelepiped-shaped load transfer block containable inside an upper portion of the load transfer wall, and a top board arranged on an upper end portion of the load transfer block and being larger in a planar shape than the load transfer wall,
wherein the jack-up stand is formed such that the corresponding jack is housed in a position which is inside the load transfer wall and under the lifting member.
